# EUROPÄISCHE PATENTANMELDUNG

(11) **EP 1 234 693 A2**
(43) Veröffentlichungstag der Anmeldung: **28.08.2002**
(21) Anmeldenummer: 02004151.3
(22) Anmeldetag: 25.02.2002
(51) Int. Cl.: B60D 1/60, B60R 25/00

(54) **Diebstahlsicherungsvorrichtung für einen PKW-Anhänger oder dergleichen**

(30) Priorität: 24.02.2001 DE 10109307
(71) Anmelder: Holz, Heinrich, 30519 Hannover (DE)
(72) Erfinder: Holz, Heinrich, 30519 Hannover (DE)
(74) Vertreter: Einsel, Martin

(57) **Zusammenfassung**

Die Erfindung betrifft eine Diebstahlsicherungsvorrichtung für einen PKW-Anhänger oder dergleichen.

Um mit relativ geringem Aufwand ein unberechtigtes Entfernen eines PKW-Anhängers zu verhindern, ist die Diebstahlsicherungsvorrichtung versehen mit einer rohrförmigen Abdeckung (1, 2) zur Aufnahme eines Feststellhebels, wobei die rohrförmige Abdeckung an einem Ende geschlossen ist, einem flexiblen Verbindungsteil (3), das an der rohrförmigen Abdeckung (1, 2) befestigt ist und Befestigungsstellen (6) zur Aufnahme einer Verriegelungseinrichtung (15) aufweist, wobei die Verbindungseinrichtung (3) derartig an dem PKW-Anhänger befestigbar ist, dass der rohrförmige Aufsatz (1) verliersicher und unabnehmbar auf dem Feststellhebel aufgesetzt ist und eine Löseeinrichtung (18) für Benutzer unzugänglich abdeckt.

## Beschreibung

Die Erfindung betrifft eine Diebstahlsicherungsvorrichtung für einen PKW-Anhänger oder dergleichen, der eine durch einen entriegelbaren Feststellhebel bedienbare Feststellbremse aufweist. Neben einem PKW-Anhänger können weiterhin auch Viehtransporter, Pferdeanhänger, Wohnwagen oder Marktbeschicker beziehungsweise Verkaufswagen mit der erfindungsgemäßen Diebstahlsicherungsvorrichtung geschützt werden.

Diebstahlsicherungsvorrichtungen für PKW-Anhänger sind in unterschiedlicher Form bekannt (DE 198 39 933 A1 und GB 2 221 881 A). Diese zeigen eine Diebstahlsicherungsvorrichtung, bei der ein PKW-Anhänger an einer Anhängerkupplung mit Kugelkopf eines PKW befestigt werden kann. Ein zwischen zwei Endstellungen verschwenkbarer oder verschiebbarer Sicherungsriegel kann einen Schwenkhebel zum Lösen oder Arretieren der Kupplung blockieren. Der Sicherungsriegel kann in einer Endstellung durch ein Schloss gesichert werden. Durch eine derartige Diebstahlsicherungsvorrichtung kann ein unberechtigtes Abkuppeln des Anhängers von dem Fahrzeug sowie ein unberechtigtes Ankuppeln des Anhängers an ein anderes Fahrzeug verhindert werden.

Zum Teil werden PKW-Anhänger jedoch auch in für Außenstehende zugänglicher Weise abgestellt, so dass Unberechtigte den ganzen Anhänger gegebenenfalls auch ohne Montage an einen PKW abtransportieren können. Hierzu kann der Anhänger gegebenenfalls auf einem anderen Anhänger oder einem Lastkraftwagen mitsamt der Diebstahlsicherungsvorrichtung abtransportiert werden. Die Diebstahlsicherungsvorrichtung kann anschließend an einem sicheren Platz durch Aufschweißen des Bügelschlosses entfernt werden. Einen Schutz gegen ein derartiges unberechtigtes Entfernen des PKW-Anhängers wird durch die oben genannte Diebstahlsicherungsvorrichtung nicht gewährleistet.

Es ist weiterhin eine Diebstahlsicherungsvorrichtung bekannt (GB 2 222 563 A), die eine Lösung des Feststellhebels selbst verhindert, indem über die Löseeinrichtung - in der Regel ein Druckknopf - des Feststellhebels ein zylindrischer Körper gestülpt wird, der die Betätigung der Löseeinrichtung blockiert. An diesem Körper sind zwei koaxial angeordnete sich gegenüber liegende verlängerte Ansätze vorgesehen, die an ihren freien Enden einen Federring tragen. Dieser Federring wird eng um den Griff des Feststellhebels gelegt und mit einem Schloss festgelegt. Dadurch ist die Löseeinrichtung nicht mehr zugänglich.

Der Erfindung liegt die Aufgabe zu Grunde, eine einfach und kostengünstig herstellbare Diebstahlsicherungsvorrichtung zu schaffen, die einfach und zuverlässig zu montieren ist und eine zuverlässige und weitgehende Sicherung des Anhängers gegen Diebstähle gewährleistet.

Diese Aufgabe wird durch die im Anspruch 1 definierte Erfindung gelöst. Weiterbildungen der Erfindung sind in den abhängigen Ansprüchen gekennzeichnet. Dadurch wird eine Diebstahlsicherungsvorrichtung für einen Pkw-Anhänger erzielt, bei der die Abdeckung nicht nur verliersicher und unabnehmbar auf dem Feststellhebel aufgesetzt ist und die Löseeinrichtung zum Lösen des Feststellhebels für Personen unzugänglich abgedeckt ist. Diese Diebstahlsicherungsvorrichtung lässt sich darüber hinaus einfach herstellen und ohne besondere Anpassung bei den meisten Pkw-Anhängern anbringen.

Im Prinzip besteht die Erfindung darin, dass eine rohrförmige, an einem Ende geschlossene Abdeckung zur Aufnahme eines die Löseeinrichtung aufweisenden Feststellhebels innerhalb der Abdeckung, bei der eine flexible Verbindungseinrichtung an der rohrförmigen Abdeckung befestigt ist, mit mindestens einer Befestigungsstelle für die Aufnahme einer Verriegelungseinrichtung versehen ist, und bei der die Verbindungseinrichtung mit der Befestigungsstelle an einer vom Feststellhebel getrennten Stelle des Pkw-Anhängers befestigbar ist.

Die rohrförmige Abdeckung - zum Beispiel ein Metallrohr mit aufgeschweißter Abdeckplatte - wird über eine flexible Verbindungseinrichtung - zum Beispiel eine Metallkette - an dem Pkw-Anhänger gesichert. Hierbei wird die flexible Verbindungseinrichtung derartig straff gesichert, dass die rohrförmige Abdeckung nicht von dem Feststellhebel abgezogen werden kann oder die Löseeinrichtung des Feststellhebels frei gegeben wird. Für eine derartige straffe Anbringung der Verbindungseinrichtung weist diese vorteilhafter Weise mehrere Befestigungsstellen, insbesondere bei gleichmäßigen Abständen auf.

Hierzu eignet sich als flexible Verbindungseinrichtung insbesondere eine Metallkette, da jedes Glied der Metallkette als Befestigungsstelle zur Befestigung an einem geeigneten Bereich des PKW-Anhängers, zum Beispiel einer Abdeckung der Feststellbremse oder des Rades dienen kann. Weiterhin kann die Kette auch um die Deichsel des Anhängers gelegt werden. Als Verriegelungseinrichtung kann ein Bügelschloss oder ein Diskschloss verwendet werden. Somit kann die erfindungsgemäße Diebstahlsicherungsvorrichtung auf einfachste Weise durch ein Metallrohr mit aufgeschweißter Abdeckplatte und angeschweißter Metallkette verwirklicht werden, die über ein Bügelschloss an einer geeigneten Stelle des Anhängers befestigbar ist.

Die Kette kann hierbei an der Bodenplatte oder vorteilhafterweise am Außenumfang des Metallrohres angeschweißt sein. Der Innendurchmesser der rohrförmigen Abdeckung ist vorteilhafterweise so gewählt, dass über die Länge des Metallrohres keine Zugänglichkeit durch das Innere der Abdeckung zu der Löseeinrichtung möglich ist. Hierzu sollte die rohrförmige Abdeckung so dimensioniert sein, dass sie zum einen einen üblichen Feststellhebel problemlos aufnimmt und zum anderen nicht zuviel radiales Spiel lässt. Die Länge des Metallrohres wird vorteilhafterweise so gewählt, dass ein axiales Abziehen des Metallrohres vom Feststellhebel auch bei nicht ganz straff gesicherter Kette verhindert wird, das Metallrohr jedoch nicht unnötig lang ist. Vorteilhafterweise erstreckt sich das Metallrohr über die Länge eines abgewinkelten bzw. gekröpften Bereiches des Feststellhebels der Feststellbremse.

Die straff gespannte Kette verhindert auch dann ein Verstellen des Feststellhebels, wenn dieser keine Löseeinrichtung enthält.

Die Erfindung wird im Folgenden anhand der beiliegenden Zeichnungen an einigen Ausführungsformen beispielsweise näher erläutert. Es zeigen:
- **Figur 1**: eine Seitenansicht eines Teilbereiches einer erfindungsgemäßen Diebstahlsicherungsvorrichtung;
- **Figur 2**: eine Vorderansicht der Vorrichtung von Figur 1;
- **Figur 3a,b**: Ausschnitte aus einem PKW-Anhänger mit aufgesetzter Diebstahlsicherungsvorrichtung.

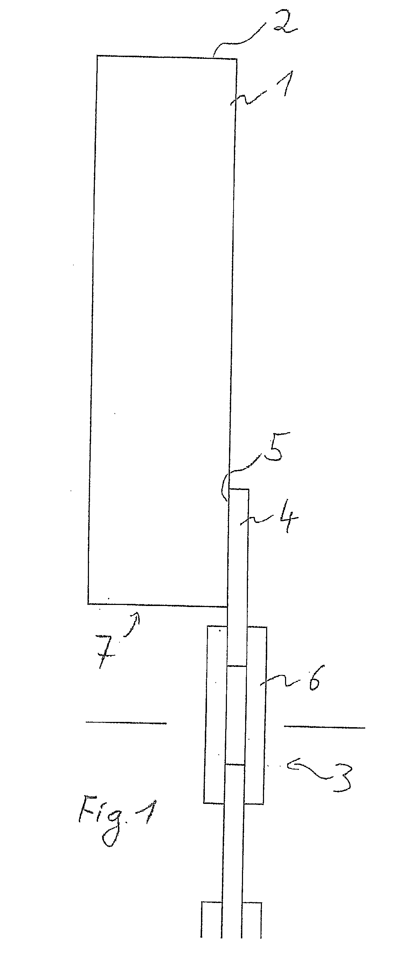

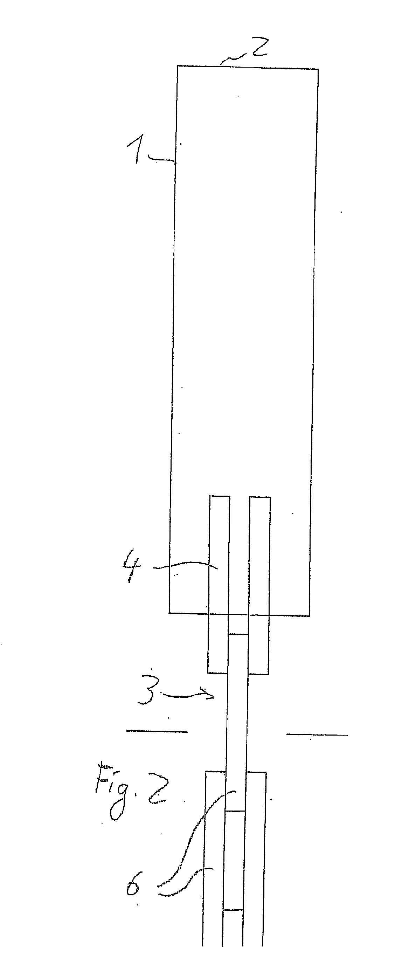

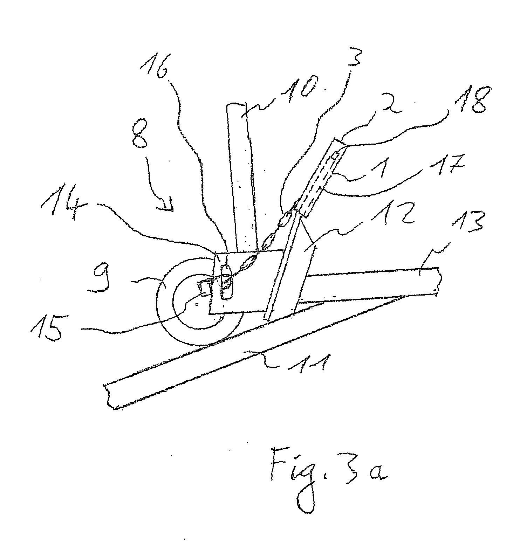

Gemäß **Figur 1** weist eine erfindungsgemäße Diebstahlsicherungsvorrichtung gemäß einer Ausführungsform der Erfindung eine Abdeckung 1, 2, beispielsweise eine Aufnahmehülse, mit einem Metallrohr 1 mit einer Länge von zum Beispiel 13 bis 17 cm, vorzugsweise 14 bis 15 cm und einem Durchmesser von zum Beispiel 3 bis 7 cm, vorzugsweise 4 bis 6 cm, zum Beispiel 4,5 cm, auf. Gemäß **Figur 1, 2** ist an einem oberen Ende des Metallrohres 1 eine Bodenplatte 2 aufgeschweißt.

An einem unteren Ende des Rohres 1 ist eine Kette 3 angeschweißt. Hierzu kann vorteilhafterweise ein ganzes Glied oder ein Teil eines Gliedes als Verbindungsglied 4 über eine Schweißnaht 5 am Metallrohr 1 befestigt sein. Die weiteren Glieder 6 der Kette erstrecken sich somit flexibel von diesem Verbindungsglied 4 weg.

Die Kettenglieder der Metallkette können zum Beispiel 5 bis 8 cm, zum Beispiel etwa 6 cm lang sein. Die Länge der Kette kann zum Beispiel zwischen 40 und 70 cm, vorzugsweise 50 bis 60 cm liegen.

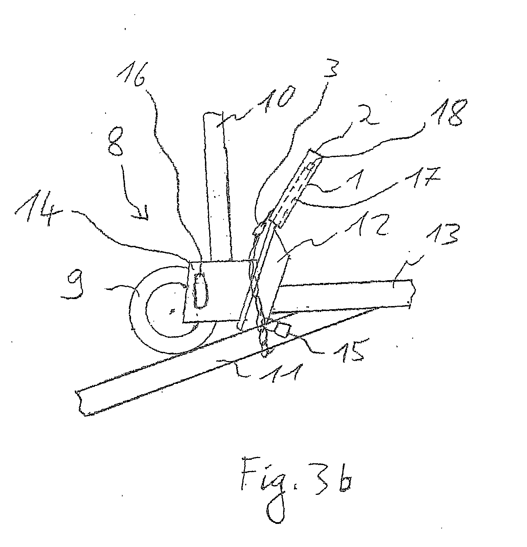

Anbringungen der erfindungsgemäßen Diebstahlsicherungsvorrichtung sind in Figur 3 a und b gezeigt. Von einem PKW-Anhänger 8 sind hierbei ausschnittweise ein vorderes Rad 9, eine vertikale Stange 10, eine Deichsel 11, eine Feststellbremse 12 und eine horizontale Stange 13, die zu dem restlichen Teil des Anhängers führt, gezeigt. Das vordere Rad 9 und die vertikale Stange 10 werden hierbei zum Parken und Rangieren von Hand benötigt.

Die erfindungsgemäße Diebstahlsicherungsvorrichtung wird somit vorteilhafterweise im Fahrwerksbereich des PKW-Anhängers 8 montiert. Hierzu zunächst die Feststellbremse bis zum Anschlag angezogen, wodurch eine spätere Lockerung der Kette durch Nachziehen der Bremse verhindert wird. Durch die festgezogene Bremse wird ein Rollen der Räder ausgeschlossen. Anschließend wird die aus Rohr 1 und Abdeckung 2 gebildete Aufnahmehülse über einen Feststellhebel 17 der Feststellbremse 12 gelegt derartig, dass eine Löseeinrichtung 18 zum Lösen der Feststellbremse in dem Rohr aufgenommen und somit für Benutzer nicht zugänglich ist. Die Kette 3 wird an einer geeigneten Stelle des PKW-Anhängers, vorteilhafterweise im Fahrwerksbereich, zum Beispiel gemäß **Figur 3a** in einem Teilglied 16 einer Abdeckung 14 der Radbefestigung, oder gemäß **Figur 3b** um die Deichsel 11, mittels eines Schlosses, zum Beispiel des gezeigten Bügelschlosses 15 oder eines Diskschlosses über ein Kettenglied 6 gesichert. Hierbei muss die Kette 3 lediglich derartig straff gespannt sein, dass ein Abziehen des Metallrohres 1 von dem Feststellhebel 17 und eine Zugänglichkeit der Löseeinrichtung 18 für Benutzer verhindert werden. Da die Löseeinrichtung nicht mehr zugänglich ist, kann die Feststellbremse nach Anziehen - bei der diese gemäß Figur 3 nach oben zeigt - und Sicherung mit der erfindungsgemäßen Diebstahlsicherungsvorrichtung ohne Entfernung des Schlosses 15 und Abziehen der Diebstahlsicherungsvorrichtung nicht mehr verschwenkt werden, so dass ein Abtransport durch Wegrollen des PKW-Anhängers 8 verhindert wird.

Der Innendurchmesser der Aufnahmehülse kann zum Beispiel 4,5 cm, die Außenlänge 15,5 cm betragen. Eine Kettenlänge kann zum Beispiel 65 cm betragen, insbesondere wenn an dem Anhänger keine Auslassung vorhanden ist. Die Dimensionierung der Aufnahmehülse kann so gewählt werden, dass diese nicht die Löseeinrichtung berührt.

Auch bei Anhängern ohne Arretierung kann somit erfindungsgemäß eine Diebstahlsicherung gewährleistet werden.

### Bezugszeichenliste

- 1: Rohr
- 2: Bodenplatte
- 3: Verbindungseinrichtung (Kette)
- 4: Teilglied
- 5: Schweißnaht
- 6: Befestigungsstelle (Kettenglied)
- 7: Aufnahmehülsenöffnung
- 8: Anhänger
- 9: Rad
- 10: vertikale Stange

- 11: Deichsel
- 12: Feststellbremse
- 13: horizontale Stange
- 14: Abdeckung der Radbefestigung
- 15: Verriegelungseinrichtung (Schloss)
- 16: Ausnehmung
- 17: Feststellhebel
- 18: Löseeinrichtung

## Patentansprüche

1. Diebstahlsicherungsvorrichtung für einen Pkw-Anhänger oder dergleichen, mit
einer rohrförmigen, an einem Ende geschlossenen Abdeckung (1, 2) zur Aufnahme eines eine Löseeinrichtung (18) aufweisenden Feststellhebels (17) innerhalb der Abdeckung (1, 2),
bei der eine flexible Verbindungseinrichtung (3) einerseits an der rohrförmigen Abdeckung (1, 2) befestigt ist (4, 5) und andererseits mit mindestens einer Befestigungsstelle (6) für die Aufnahme einer Verriegelungseinrichtung (15) versehen ist,
und bei der die Verbindungseinrichtung (3) mit der Befestigungsstelle (6) an einer solchen vom Feststellhebel (17) getrennten Stelle (16) des Pkw-Anhängers befestigbar ist, dass die rohrförmige Abdeckung (1) unabnehmbar auf dem Feststellhebel (17) gehalten ist.

2. Diebstahlsicherungsvorrichtung nach Anspruch 1,
**dadurch gekennzeichnet,**
**dass** die Abdeckung (1, 2) ein Rohr (1) und eine an einem Ende des Rohres (1) befestigte Bodenplatte (2) aufweist.

3. Diebstahlsicherungsvorrichtung nach Anspruch 2,
**dadurch gekennzeichnet,**
**dass** das Rohr (1) aus einem Metall, vorzugsweise Stahl, hergestellt ist und die Bodenplatte (2) aus einem Metall, vorzugsweise Stahl, hergestellt und an dem Rohr (1) angeschweißt ist derartig, dass das Ende des Rohres (1) abgedeckt ist.

4. Diebstahlsicherungsvorrichtung nach einem der vorherigen Ansprüche,
**dadurch gekennzeichnet,**
**dass** die flexible Verbindungseinrichtung mehrere Befestigungsstellen (6), vorzugsweise in gleichmäßigen Abständen, aufweist.

5. Diebstahlsicherungsvorrichtung nach einem der vorherigen Ansprüche,
**dadurch gekennzeichnet,**
**dass** die flexible Verbindungseinrichtung eine Kette (3), vorzugsweise aus einem Metall, ist.

6. Diebstahlsicherungsvorrichtung nach Anspruch 4,
**dadurch gekennzeichnet,**
**dass** die Kette (3) an einem Außenumfang der Abdeckung (1) angeschweißt ist.

7. Diebstahlsicherungsvorrichtung nach einem der vorherigen Ansprüche,
**dadurch gekennzeichnet,**
**dass** die Abdeckung (1) einen Innenquerschnitt von 3 bis 7 cm, vorzugsweise 4 bis 5 cm, aufweist.

8. Diebstahlsicherungsvorrichtung nach einem der vorherigen Ansprüche,
**dadurch gekennzeichnet,**
**dass** die Abdeckung (1) sich über zumindest beinahe die gesamte Länge des Feststellhebels erstreckt.

9. Diebstahlsicherungsvorrichtung nach einem der vorherigen Ansprüche,
**dadurch gekennzeichnet,**
**dass** das Rohr (1) eine Länge von 12 bis 16 cm, vorzugsweise 14 bis 15 cm aufweist.

10. Diebstahlsicherungsvorrichtung nach einem der vorherigen Ansprüche,
**dadurch gekennzeichnet,**
**dass** die Verriegelungsvorrichtung ein Schloss (15), vorzugsweise ein Bügelschloss oder ein Diskschloss ist.

11. Diebstahlsicherungsvorrichtung nach einem der vorherigen Ansprüche,
**dadurch gekennzeichnet,**
**dass** die Dimensionierung der rohrförmigen Abdeckung (1) so gewählt ist,
**dass** sie die Löseeinrichtung (18) des Feststellhebels (17) nicht berührt.

12. Diebstahlsicherungsvorrichtung nach einem der vorherigen Ansprüche,
**dadurch gekennzeichnet,**
**dass** die Verbindungseinrichtung (3) mit der Befestigungsstelle (6) an einer solchen vom Feststellhebel (17) getrennten Stelle (16) des PKW-Anhängers befestigbar ist,
**dass** die Kette (3) über die rohrförmige Abdeckung (1) keine Bewegung des Feststellhebels zulässt.
